(19) Europäisches Patentamt / European Patent Office / Office européen des brevets

(11) **EP 4 386 693 A1**

(12) **EUROPEAN PATENT APPLICATION**

(43) Date of publication:
**19.06.2024  Bulletin 2024/25**

(21) Application number: **22213508.9**

(22) Date of filing: **14.12.2022**

(51) International Patent Classification (IPC):
**G06V 10/776** (2022.01)       **G06V 20/58** (2022.01)

(52) Cooperative Patent Classification (CPC):
**G06V 10/776; G06V 20/58**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Aptiv Technologies AG
8200 Schaffhausen (CH)**

(72) Inventors:
• NIU, Zhiheng
  42349 Wuppertal (DE)
• SCHOELER, Markus
  42853 Remscheid (DE)
• SU, Yu
  42287 Wuppertal (DE)

(74) Representative: **Manitz Finsterwald
Patent- und Rechtsanwaltspartnerschaft mbB
Martin-Greif-Strasse 1
80336 München (DE)**

(54) **METHODS AND SYSTEMS FOR DETERMINING A CONVERSION RULE**

(57)    A computer implemented method for determining a conversion rule for an object prediction model may include the following steps carried out by computer hardware components: determining a plurality of predictions based on sensor data using the object prediction model, wherein each prediction may include a respective prediction value and a respective confidence value of the respective prediction value; determining the conversion rule for the object prediction model by carrying out the following steps: determining a plurality of sampling values for assessing a performance of the object prediction model; for each sampling value of the plurality of sampling values, determining a corresponding statistical value based on ground-truth data and the plurality of confidence values, wherein the ground-truth data may be associated with the sensor data; and determining the conversion rule for the object prediction model based on the plurality of sampling values and the plurality of corresponding statistical values.

EP 4 386 693 A1

**Description**

FIELD

The present disclosure relates to methods and systems for determining a conversion rule.

BACKGROUND

The field of radar-centric environment perception for vehicles is usually tackled either by using traditional methods or by utilizing modern deep learning methods to predict objects including their locations, sizes and classes etc. in an environment of the vehicles. Since a prediction module may produce many object candidates, a tracking module may be used to make a final decision of true objects out of the object candidates and to stabilize the final decision over a period of time.

A combination of an object prediction module and a subsequent tracking module is known and used nowadays. However, there are several problems with this commonly used procedure. The tracking module is heavily coherent with the prediction module, i.e. parameters of the tracking module may have to be changed manually each time when the prediction module changes. Thus, the environment perception process cannot be automated. Additionally, the performance for different prediction modules may be very hard to compare with respect to a specific level of confidence score and a value of the produced confidence score by the respective prediction module may be different to a subjective expectation and therefore less meaningful. Across different object classes, a prediction that has a higher confidence score and is determined using the prediction module may not be favorable for some practical scenarios. Also, different prediction modules may have to be deployed or parameters of a single prediction module may have to be changed for different scenarios. In addition, once the prediction module and the tracking module are configured, it may be very hard to leverage the output for different conditions such as weather conditions and road scenarios.

Accordingly, there is a need to improve existing environment perception methods to make the predictions more reliable.

SUMMARY

The present disclosure provides a computer implemented method, a computer system and a non-transitory computer readable medium according to the independent claims. Embodiments are given in the subclaims, the description and the drawings.

In one aspect, the present disclosure is directed at a computer implemented method for determining a conversion rule for an object prediction model, the method comprising the following steps carried out by computer hardware components: determining a plurality of predictions based on sensor data using the object prediction model, wherein each prediction comprises a respective prediction value and a respective confidence value of the respective prediction value; determining the conversion rule for the object prediction model by carrying out the following steps: determining a plurality of sampling values, the sampling values being for example for assessing a performance of the object prediction model or being determined as random values or as arbitrary values, for example in an interval between 0 and 1, or being determined to be equal to the respective confidence values; for each sampling value of the plurality of sampling values, determining a corresponding statistical value based on ground-truth data and the plurality of confidence values, wherein the ground-truth data is associated with the sensor data; and determining the conversion rule for the object prediction model based on the plurality of sampling values and the plurality of corresponding statistical values.

In other words, the computer implemented method described herein may determine a conversion rule for an object prediction model based on a plurality of sample values and a plurality of respective statistical values. The plurality of statistical values may be determined based on ground-truth data and on a plurality of confidence values of a plurality of predictions. The plurality of predictions may be determined based on sensor data using the object prediction model and based on the ground-truth data, wherein the ground-truth data may be associated with the sensor data. The sensor data may be captured by at least one sensor, wherein the at least one sensor may comprise a radar sensor and/or a lidar sensor.

The predictions may be determined using at least one object prediction model as will be described herein. The at least one object prediction model may comprise a neural network. The at least one object prediction model may be an object prediction model or a predictor, for example, an image recognition model. The neural network may be a trained neural network. Training the neural network may mean finding appropriate weights of the neural connections in the neural network based on gradient backward propagation.

Each prediction of the plurality of predictions may comprise a prediction value, wherein the prediction value may describe an object, for example, a bike, a pedestrian, a stationary vehicle, a moving vehicle, a tree, a sign, a lane marking or the like. The prediction value may comprise bounding box information of the object, wherein the bounding box information may describe an outline of the respective object. For example, if the object is a vehicle, the bounding box information of the vehicle may be a rectangle enclosing the vehicle. In general, the bounding box information may be geometrical information like rectangles, circles, squares or the like enclosing an object. Alternatively or additionally, the prediction value may comprise scene type information, wherein the scene type information may describe weather conditions like snow, rain, sunshine, fog or the like and/or environmental information. The environmental information may describe a vicinity of a vehicle, for example, the vicinity where the vehicle is driving. The environmental information may describe an open space environment, for example a highway environment, an urban environment or a suburban environment. The environmental information may describe also an inner area environment like a tunnel or a parking garage.

Each prediction of the plurality of predictions may also comprise a confidence value. Each prediction value may have a corresponding confidence value. The confidence value may indicate how likely the prediction or the prediction value may be determined correctly. In other words, the confidence value may indicate a probability that the determined prediction, for example an object, may be present in the sensor data, wherein the sensor data may comprise measurement data of a sensor. The confidence value (in other words: a confidence score) may be between 0 and 1. The smaller the confidence value, the lower may be the probability that the corresponding prediction is determined correctly. The larger the confidence value, the higher may be the probability that the corresponding prediction is determined correctly.

The ground-truth data may comprise the sensor data and additionally known labels for objects represented in the sensor data. For example, the known labels may describe an object class to which the respective object belongs. The object class may comprise at least one of a bike object class, a pedestrian object class, a stationary vehicle object class and a moving vehicle object class. The known labels may alternatively or additionally comprise bounding box information or scene type information as described above. The ground-truth data may comprise test scenarios for testing or calibrating the method described herein. For example, the ground-truth data may comprise images stored in a non-transitory computer readable medium.

The performance of the object prediction model may be assessed by determining a plurality of sampling values. The performance of the object prediction model may describe an accuracy of the object prediction model, for example, how precise the predictions may be determined using the object prediction model. Additionally or alternatively, the performance may describe a computational effort required to determine an object prediction using the object prediction model. The plurality of sampling values may describe a pattern, for example the plurality of sampling values may correspond to equidistant points of the pattern. For example, the equidistant points may have a distance of 0.1 of each other, i.e. a first point of the pattern corresponding to a first sample value may have the value 0.1, a second point of the pattern corresponding to a second sample value may have the value 0.2, a third point of the pattern corresponding to a third sample value may have the value 0.3, and so on. The pattern may comprise values between 0 and 1. The plurality of sampling values may be predetermined. Alternatively, the plurality of sampling values may be random values or stochastic values, for example values in an interval between 0 and 1.

Each statistical value of the plurality of statistical values may be a true-positive rate, wherein the true-positive rate may also refer to a sensitivity that may be used to measure a percentage of predictions which are correctly identified. In other words, the true-positive rate may describe correctly determined samples out of all predictions. The true-positive rate may be determined before a Non-Maximum Suppression (NMS), wherein the Non-Maximum Suppression describes a well-known technique to filter predictions of object detectors. Each of the at least one object prediction models may have a guaranteed true-positive rate output.

For example, the plurality of statistical values may describe a quality indication of how good a prediction is compared to the data provided in the ground-truth data. For example, the plurality of statistical values may describe a quality indication of how good objects determined using the at least one object prediction model may fit to respective objects in the ground-truth data.

Alternatively to the true-positive rate, each statistical value of the plurality of statistical values may be described by other criteria, for example, by precision and recall after NMS. Precision and recall may be performance metrics. Furthermore, the plurality of statistical values may be described as a precision or a separation of bounding box information of the predictions, for example, bounding box quality measurements like Intersection Over Union (IOU). IOU may be an evaluation metric used to measure an accuracy of an object prediction model based on ground-truth bounding boxes and predicted bounding boxes from the object prediction model. The ground-truth bounding boxes may be hand labeled bounding boxes from the ground-truth data, wherein the ground-truth bounding boxes specify where in the ground-truth data (for example, in an image) an object is. Also, a combination of the criteria (for example a combination of TP rate, and/or IOU and/or precision and recall) describing the plurality of statistical values may be possible.

The conversion rule may be a function or a mapping of the plurality of sample values and (or to) the plurality of respective statistical values. It may be possible to determine an object prediction model independent parameter using the conversion rule.

According to an embodiment, the plurality of sampling values may correspond to the plurality of confidence values. In other words, each sampling value of the plurality of sampling values may be determined by setting each of the sampling values to a respective confidence value determined using the object prediction model.

According to an embodiment, each statistical value of the plurality of statistical values may comprise a true-positive rate corresponding to the respective sampling value. The true-positive rate may be calculated as a number of true-positives divided by a sum of a number of true-positives and a number of false-negatives. The true-positives may describe how many of the predictions may be determined correctly. The false-negatives may describe how many of the predictions may be determined incorrectly. For example, a prediction may be determined incorrectly if the prediction may not correspond to an object in the sensor data or in the ground-truth data. The true-positive rate may describe how good the method may perform at determining the predictions.

According to an embodiment, the method may further comprise the following step carried out by computer hardware components: determining at least one object from the ground-truth data, wherein the at least one object may correspond to a prediction of the plurality of predictions, wherein the at least one object may be associated to an object class of a plurality of object classes. For example, the determined object may be a bike and the corresponding object class may be a bike object class, or the determined object may be a pedestrian and the corresponding object class may be a pedestrian object class, or the determined object may be a vehicle and the corresponding object class may be a vehicle object class, or the determined object may be a stationary vehicle and the corresponding object class may be a stationary vehicle object class, or the determined object may be a moving vehicle and the corresponding object class may be a moving vehicle object class. The stationary vehicle may describe a vehicle that is not moving, wherein the moving vehicle in contrary may describe a vehicle that is moving. There may also be other objects of other object classes be determined, like stationary objects as buildings, trees, guardrails or the like. The determined objects may be filtered according to the object classes.

According to an embodiment, the method may further comprise the following step carried out by computer hardware components: determining at least one object from the ground-truth data, wherein the at least one object may correspond to a prediction of the plurality of predictions, wherein the at least one object may be associated to bounding box properties. The bounding box properties may describe a minimum geometry enclosing the determined objects. The bounding box properties may describe 2D or 3D geometrical data, for example, a length, a width and, in case of 3D geometrical data, a height. Further, the bounding box properties may comprise location information of the determined object. The location information may describe a position of the determined object in the environment of the vehicle. The determined objects may be filtered according to the bounding box parameters.

According to an embodiment, the method may further comprise the following step carried out by computer hardware components: filtering the ground-truth data based on a condition, wherein the condition may be (or may be related to) at least one of an object class, a scene type, or bounding box properties; and for each sampling value of the plurality of sampling values, determining the corresponding statistical value based on the filtered ground-truth data and the plurality of confidence values. The object class may be one of a bike object class, a pedestrian object class, a stationary vehicle object class, or a moving vehicle object class. The scene type may describe a scene or a scenario at which the sensor data may be captured by a sensor. For example, the scene type may be a tunnel scene type. Thus, the sensor data may be captured using the sensor in a tunnel. The scene type may also describe weather conditions at which the sensor data may be captured by a sensor. For example, the scene type may be a snow scene type. Thus, the sensor data may be captured using the sensor at snowy weather conditions. The determined objects may be filtered according to the scene types.

According to an embodiment, the method may further comprise the following step carried out by computer hardware components: determining a comparative value for each of the at least one prediction value by comparing each of the at least one prediction value with the at least one object associated to the at least one object class. For each confidence value of the plurality of confidence values there may be a comparative value. The comparative value may indicate whether the prediction value, for example data describing an object in the sensor data, may have a corresponding object in the ground-truth data, wherein the objects may be associated to the same object class.

According to an embodiment, the method may further comprise the following step carried out by computer hardware components: determining a comparative value for each of the at least one prediction value by comparing each of the at least one prediction value with the at least one object associated to the at least one bounding box property. For each confidence value of the plurality of confidence values there may be a comparative value. The comparative value may indicate whether the prediction value, for example data describing an object in the sensor data, may have a corresponding object in the ground-truth data, wherein the objects may be associated to the same bounding box property.

According to an embodiment, the method may further comprise the following step carried out by computer hardware components: for each sampling value of the plurality of sampling values, determining the corresponding statistical value based on the plurality of confidence values and the plurality of comparative values.

According to an embodiment, the prediction values may comprise data describing the respective prediction associated to an object class of a plurality of object classes. Each prediction value may also be associated to an object class of a plurality of object classes according to the determined objects of the ground-truth data. The plurality of object classes may be the same as described above for the determined object of the ground-truth data.

According to an embodiment, the prediction values may comprise data describing the respective prediction associated to bounding box properties. Each prediction value may also be associated to bounding box properties according to the determined objects of the ground-truth data. The bounding box properties may be the same as described above for the determined object of the ground-truth data.

According to an embodiment, the method may further comprise the following steps carried out by computer hardware components: for each sampling value of the plurality of sampling values: determining a first number as a number of predictions with a respective confidence value greater or equal than the sampling value; determining a second number as a number of predictions with a respective confidence value greater or equal than the sample value, wherein the predictions with a respective confidence value greater or equal than the sample value may correspond to a corresponding object in the ground-truth data; and determining the statistical value by dividing the second number by the first number.

According to an embodiment, determining the conversion rule may comprise a fitting of the conversion rule to the plurality of sampling values and the plurality of corresponding statistical values.

According to an embodiment, the fitting of the conversion rule to the plurality of sampling values and the plurality of corresponding statistical values may comprise using a regression method. The regression method may comprise a least squares method and the conversion rule may comprise a sigmoid-like function. Thus, fitting the conversion rule may be performed using the least squares method. The least squares method may be a statistical method to find the best fit for a set of data points by minimizing a sum of offsets or residuals of the data points from the conversion rule or from the curve defined by the conversion rule, wherein the data points may be described by the plurality of statistical values and the plurality of sampling values. The sigmoid-like function may be a mathematical function having a characteristic "S"-shaped curve or sigmoid curve.

According to an embodiment, the fitting of the conversion rule may approximate a curve based on a plurality of scores, wherein each score of the plurality of scores may represent a statistical value of the plurality of statistical values and the corresponding sampling value of the plurality of sampling values, wherein each score may comprise a minimum distance to the curve.

In another aspect, the present disclosure is directed at a computer implemented method for applying a conversion rule determined by methods described herein, the method comprising the following step carried out by computer hardware components: applying the conversion rule to an output of an object prediction model. The output of the object prediction model may be the confidence value. The conversion rule or the confidence calibration may allow to align different object prediction models or to determine comparable statistical values, for example, true-positive rates for each of the different object prediction models.

According to an embodiment, the method may further comprise the following step carried out by computer hardware components: determining a tracker parameter for a unified tracking module based on the conversion rule such that the unified tracking module is applicable to the object prediction model. The unified tracking module may estimate or predict the plurality of predictions in consecutive frames of the sensor data. The tracker parameter may enable the unified tracking module to predict the plurality of predictions in consecutive frames of the sensor data, wherein the tracker parameter may be a fixed value applicable to different object prediction models. No additional adaptation of the tracker parameter may be needed once the tracker parameter has been determined based on the conversion rules of a plurality of object prediction models, i.e. the tracker parameter may be tuned once and may be used for subsequent updates of object prediction models.

According to an embodiment, the output of the object prediction model once applied to the conversion rule may be used as input to the unified tracking module. Additionally, a further conversion rule corresponding to a further object prediction model may be applied to an output of the further object prediction model. The output of the further object prediction model once applied to the further conversion rule may be used as input to the unified tracking module without changing the tracking parameters. The output of the respective object prediction model and the respective further object prediction model, after being applied to the respective conversion rule of the corresponding object prediction model, may yield comparable or aligned true-positive rate outputs.

In another aspect, the present disclosure is directed at a computer system, said computer system comprising a plurality of computer hardware components configured to carry out several or all steps of the computer implemented method described herein. The computer system can be part of a vehicle.

The computer system may comprise a plurality of computer hardware components (for example a processor, for example processing unit or processing network, at least one memory, for example memory unit or memory network, and at least one non-transitory data storage). It will be understood that further computer hardware components may be provided and used for carrying out steps of the computer implemented method in the computer system. The non-transitory data storage and/or the memory unit may comprise a computer program for instructing the computer to perform several or all steps or aspects of the computer implemented method described herein, for example using the processing unit and the at least one memory unit.

In another aspect, the present disclosure is directed at a vehicle, comprising the computer system described herein and at least one sensor. The sensor may be a radar system, a camera and/or a LIDAR system.

The vehicle can be a car or truck and the sensor may be mounted on the vehicle. The sensor may be directed to an area in front or in the rear or at a side of the vehicle. Images may be captured by the sensor when the vehicle is moving or when the vehicle is stationary.

In another aspect, the present disclosure is directed at a non-transitory computer readable medium comprising instructions which, when executed by a computer, cause the computer to carry out several or all steps or aspects of the computer implemented method described herein. The computer readable medium may be configured as: an optical medium, such as a compact disc (CD) or a digital versatile disk (DVD); a magnetic medium, such as a hard disk drive (HDD); a solid state drive (SSD); a read only memory (ROM), such as a flash memory; or the like. Furthermore, the computer readable medium may be configured as a data storage that is accessible via a data connection, such as an internet connection. The computer readable medium may, for example, be an online data repository or a cloud storage.

The present disclosure is also directed at a computer program for instructing a computer to perform several or all steps or aspects of the computer implemented method described herein.

DRAWINGS

Exemplary embodiments and functions of the present disclosure are described herein in conjunction with the following drawings, showing schematically:

Fig. 1           a perception system for object detection in an environment of a vehicle;

Fig. 2           a further perception system for object detection in an environment of a vehicle;

Fig. 3           a calibration system according to various embodiments;

Fig. 4           a system for determining a conversion rule according to various embodiments;

Fig. 5           a system for setting parameters of a tracking module according to various embodiments;

Fig. 6A          precision recall curves for an object prediction model in different object classes;

Fig. 6B          precision confidence curves for the object prediction model of Fig. 6A in different object classes;

Figs. 7A to 7D   true-positive rate confidence curves for two different object prediction models in different object classes;

Fig. 8           a flow diagram illustrating a method for determining a conversion rule according to various embodiments;

Fig. 9           a flow diagram illustrating a method for applying a conversion rule according to various embodiments; and

Fig. 10          a computer system with a plurality of computer hardware components configured to carry out steps of a computer implemented method for determining a conversion rule according to various embodiments.

DETAILED DESCRIPTION

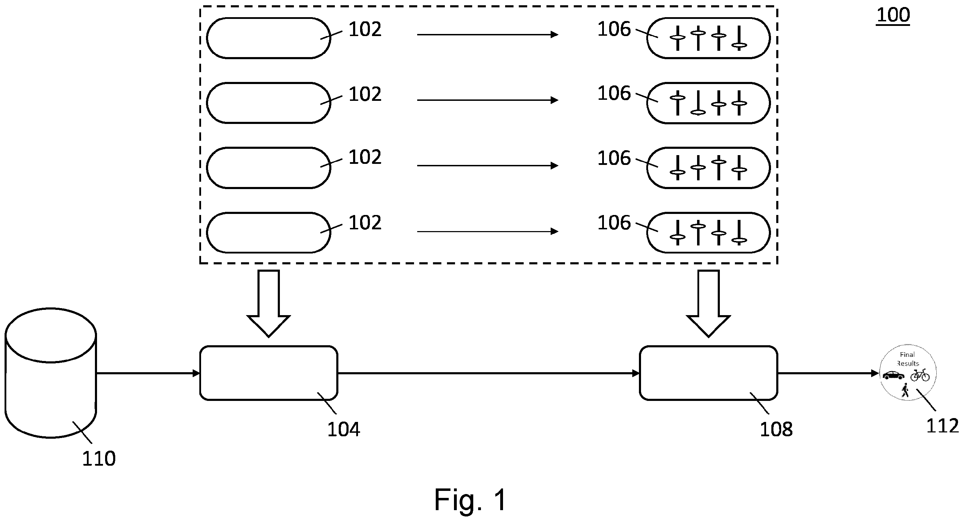

Fig. 1 shows a perception system 100 for object detection in an environment of a vehicle. An object prediction model 102 may be used to predict or to determine a plurality of predictions including object candidates based on recorded data 110 of a sensor, wherein the sensor may be mounted on the vehicle. There may be a plurality of object prediction models 102 for predicting different objects in the environment of the vehicle. A predictor module 104 may use the respective object prediction model 102 to predict the different objects. The object prediction model 102 may be a neural network that may be trained automatically. For each trained object prediction model 102, a respective tracker parameter 106 may be used by a tracking module 108. The respective tracker parameter 106 may have to be manually tuned correspondingly for each trained object prediction model 102. For example, if another object prediction model 102 is used, the corresponding tracking module 108 may have to be adapted by using a new tracker parameter 106 since an older tracker parameter 106 may not be applicable anymore. The tracking module 108 may output a final decision of true objects out of the object candidates predicted by the predictor module 104. The output of the tracking module 108 may include object detections 112.

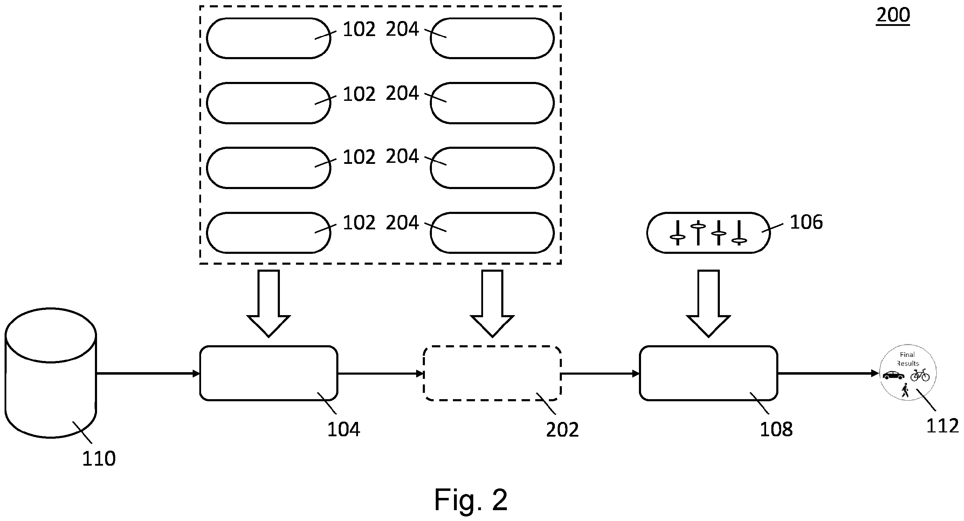

Fig. 2 shows a further perception system 200 for object detection in an environment of a vehicle. Compared to the perception system 100 of Fig. 1, the perception system 200 may additionally include a confidence module 202. The confidence module 202 may be inserted between the predictor 104 and the tracking module 108 to overcome the above mentioned problems of known combinations of an object prediction module and a subsequent tracking module. The confidence module 202 may align different trained object prediction models 102 so that a unified tracking module 108 with fixed tracker parameters 106 may be feasible for all trained object prediction models 102. The confidence module 202 may work on top of those different trained object prediction models 102. The confidence module 202 may determine a conversion rule 204 for each of the trained object prediction models 102, wherein the conversion rule 204 may be used to align the different trained object prediction models 102. The conversion rule 204 may be used for determining the fixed tracker parameters 106 for the unified tracking module 108. Furthermore, the conversion rule 204 for the additionally introduced confidence module 202 may be obtained automatically in an offline calculation procedure which may be called confidence calibration.

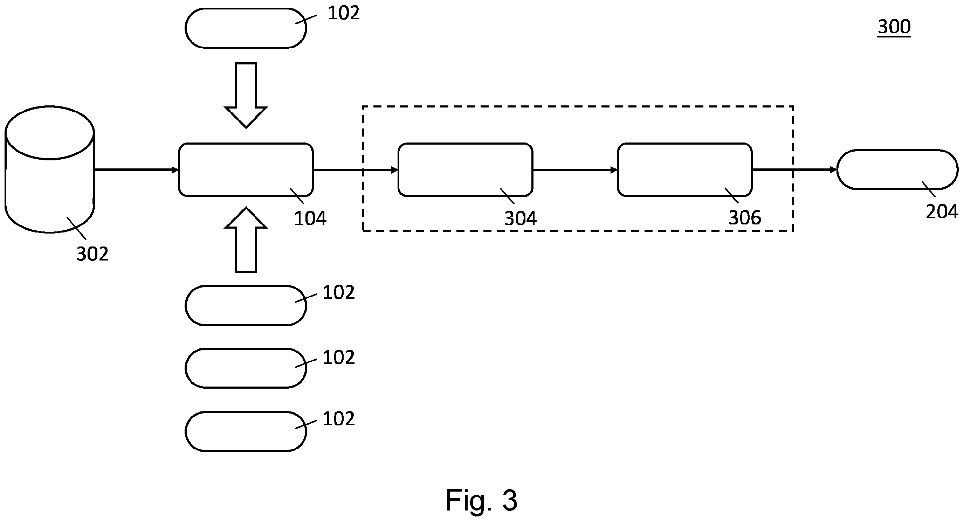

Fig. 3 shows a calibration system 300 for confidence calibration in an offline calculation procedure. The calibration system 300 may include the predictor 104, a statistical value estimator 304 and a conversion rule estimator 306. The calculation procedure may be performed or carried out automatically, i.e. there may be no manual input from a user necessary. For the confidence calibration, ground-truth data 302 or calibration logs may be used as input to the predictor 104, wherein the ground-truth data 302 may be sensor data including additional information, for example labels. The sensor data may be captured by at least one sensor mounted on the vehicle. The at least one sensor may be a camera, a radar sensor, and/or a lidar sensor. The ground-truth data 302 may include data representing at least one object, wherein a respective label for the at least one object may be known. The respective label of the at least one object may assign the at least one object to an object class. There may be a plurality of object classes, for example, a pedestrian object class, a bike object class, a stationary vehicle object class, and/or a moving vehicle object class. The plurality of object classes may be predetermined.

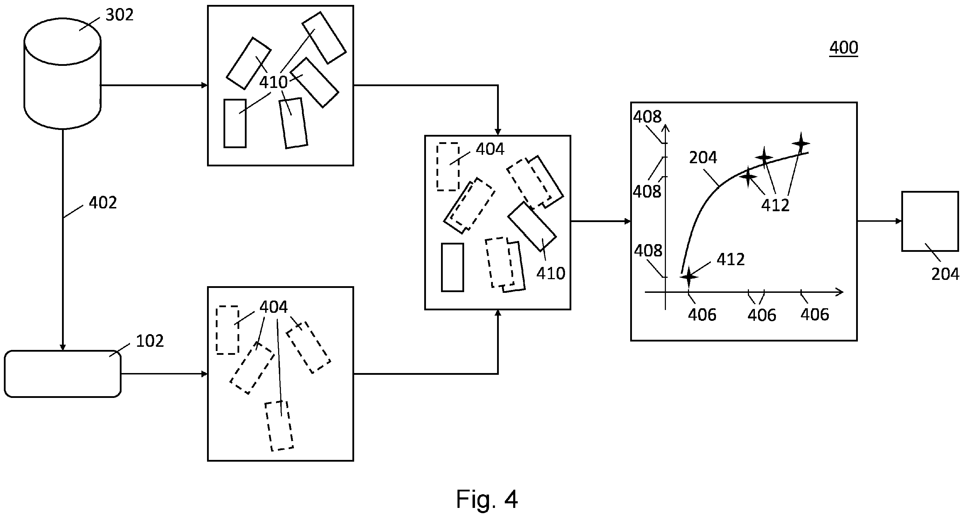

The predictor 104 may include at least one object prediction model 102, wherein the at least one object prediction model 102 may determine a plurality of predictions in the sensor data. For each of the predictions of the plurality of predictions, a confidence value may be determined. The confidence value may indicate a probability of an object detection in the sensor data. In other words, the confidence value may be a probability value that indicates a likelihood that the determined object is present in the sensor data. The predictor 104 may output at least the confidence value to the statistical value estimator 304. Together with the labels of the ground-truth data 302, the statistic estimator 304 may calculate statistical values. Based on the statistical values, the conversion rule estimator 306 may determine the conversion rule 204. More details of determining the statistical values and determining the conversion rule 204 may be described in Fig. 4. The confidence calibration carried out by the calibration system 300 may neither change the native object prediction models 102 itself nor change a performance of the object prediction models 102. As a result, the confidence calibration may allow to align the confidence values determined from different object prediction models 102 such that a unified tracking module 108 may be applied in addition to the object prediction model 102 independently which object prediction model 102 may finally be chosen.

The confidence calibration may also be used to tackle problems of different conditions and/or scenarios. This may be achieved by creating a plurality of subsets of the ground-truth data 302 (in other words: calibration data) corresponding to a specific scenario and/or condition and determining conversion rules 204 (in other words: calibration curves) for each subset of the plurality of subsets individually. For example, the ground-truth data 302 may be filtered by bounding box information, scene information and/or object class information. A conversion rule 204 may be determined for each filtered subset of the ground-truth data 302, i.e. for the subset of filtered ground-truth data 302, based on bounding box information, or for the subset of filtered ground-truth data 302 based on scene information, or for the subset of filtered ground-truth data 302 based on object class information. Additionally, the object prediction model 102 may also determine bounding box information and/or object class information of the predictions, particularly of the determined objects. The bounding box information of the object may include information of a location of the object, a distance of the object to another object, or a geometrical information like a length and/or a width of the object. The scene information may include information about an environment in that the object may be detected by the at least one sensor. For example, the scene information may include that the object is captured in a tunnel, in an open field area, and/or at bad weather conditions like fog conditions. The scene information may be associated to a scene type. The object class information of the object may indicate what kind of object the object is. For example, the object class information may indicate that the object is a pedestrian, a bike, a stationary vehicle and/or a moving vehicle.

The ground-truth data 302 as well as the predictions of the object prediction model 102 may be filtered by the bounding box information, the scene information, and/or the object class information. This may result in a conversion rule 204 (or calibration curve) conditioned not only on the object prediction model 102, but also on the bounding box information, the scene information, and/or the object class information, as shown in Eq. 1:

$$cr(\gamma \mid model) \rightarrow cr(\gamma \mid model, object\ class, scene, bounding\ box), \qquad \text{(Eq. 1)}$$

wherein cr is an abbreviation for the conversion rule 204 and $\gamma$ may describe a statistical value that will be described further below.

A conversion rule 204 depending on a scene type, for example a tunnel scenario, may be described by Eq. 3 below for instance. A generally trained object prediction model 102 may work very well in an open space, for example on a highway, because of a high true-positive rate (TP-rate) while the performance of the same object prediction model 102 in a tunnel may be worse due to low TP-rates at tunnel walls. Without confidence calibration, the object prediction model 102 may predict false positive predictions, i.e. predictions of the object prediction model 102 that may not correspond to objects in the ground-truth data 302, at the tunnel walls with a high confidence value while in the open space a prediction with the same confidence value may be more likely to be a true-positive prediction, i.e. a prediction of the object prediction model 102 that may correspond to an object in the ground-truth data 302.

With the help of the conversion rule 204 determined by the confidence calibration, a statistical value $\gamma$ may be determined conditioned on the open space (Eq. 2) and the tunnel scenario (Eq. 3) separately for each class:

$$cr(\gamma \mid model, object\ class, open\_space), \qquad \text{(Eq. 2)}$$

$$cr(\gamma \mid model, object\ class, tunnel). \qquad \text{(Eq. 3)}$$

As long as the vehicle is located in the open space, the statistical value $\gamma$ may be determined using Eq. 2 to rectify the network predictions for example. When the vehicle is entering the tunnel, Eq. 3 may be used to determine the statistical value $\gamma$ to rectify the network predictions. In such a situation, the tracking module 108 may remain unchanged without extra effort to cope with different TP-rates.

Fig. 4 shows a conversion system 400 for determining a conversion rule 204 according to various embodiments. The conversion system 400 may receive input data from an object prediction model 102 and from a calibration log, wherein the calibration log may include ground-truth data 302. The object prediction model 102 may determine a plurality of predictions 404 based on sensor data 402, wherein each prediction 404 may include a respective prediction value and a respective confidence value. The respective confidence value may indicate a confidence of the respective prediction value. In other words, the respective confidence value may be the confidence value described above. Each prediction value of the plurality of prediction values may include data describing the respective prediction 404. For example, each prediction value may be associated to an object associated to one of an object class of the plurality of object classes, and/or bounding box properties of the respective prediction 404.

The ground-truth data 302 may be associated with the sensor data 402. At least one object 410 may be determined from the ground-truth data 302, wherein the at least one object 410 may correspond to a prediction 404 of the plurality of predictions 404. The at least one object 410 may be associated to an object class of the plurality of object classes, and/or to bounding box properties depending on the prediction value of the respective prediction 404. For example, if the prediction value of the respective prediction 404 is associated to an object class, then the object 410 may also be associated to the object class. If the prediction value of the respective prediction 404 is associated to boundary properties, then the object 410 may also be associated to the boundary properties.

For each of the at least one prediction value, a comparative value may be determined by comparing each of the at least one prediction value with the at least one object 410 associated to the at least one object class if the at least one prediction value is associated to an object class. If the at least one prediction value is associated to bounding box properties, a comparative value may be determined by comparing each of the at least one prediction value with the at least one object 410 associated to bounding box properties.

For each sampling value 406 of a plurality of sampling values 406, a corresponding statistical value 408 may be determined based on the ground-truth data 302 and the plurality of confidence values. In particular, for each sampling value 406 of the plurality of sampling values 406, the corresponding statistical value 408 may be determined based on the plurality of confidence values and the plurality of comparative values. Each statistical value 408 of the plurality of statistical values 408 may be a true-positive rate (TP-rate) corresponding to the respective sampling value 406, for example, a true-positive rate within a fixed confidence interval for a given object class. The plurality of sampling values 406 may correspond to the plurality of confidence values as shown in Fig. 4. However, the sampling values may also be predetermined values between 0 and 1, for example, 0.1, 0.2, 0.3 to 0.9.

In one embodiment of the invention, the statistical value 408 for each sampling value 406 of the plurality of sampling values 406 may be determined by the following steps: determining a first number as a number of the predictions 404 with a respective confidence value greater than the sampling value 406; determining a second number as a number of the predictions 404 with a respective confidence value greater than the sample value 406, wherein the predictions 404 with a respective confidence value greater than the sample value 406 may correspond to a corresponding object 410 in the ground-truth data 302; and determining the statistical value 408 by dividing the second number by the first number.

Each statistical values 408 of the plurality of statistical values 408 and the corresponding sampling value 406 may define a score 412. In other words, each score 412 of a plurality of scores 412 may represent a statistical value 408 of the plurality of statistical values 408 and the corresponding sampling value 406 of the plurality of sampling values 406.

The conversion rule 204 may describe a curve that may be determined by the plurality of scores 412. A fitting of the conversion rule 204 to the plurality of sampling values 406 and the plurality of corresponding statistical values 408 may be carried out by using a regression method, wherein the regression method may be a least squares method and the conversion rule 204 or the curve may be described by a sigmoid-like function. Thus, the conversion rule 204 may approximate the plurality of scores 412 such that each score 412 of the plurality of scores 412 may have a minimum distance to the conversion rule 204.

Fitting the conversion rule 204 may be carried out using numerical solutions or analytical solutions. The conversion rule 204 may be determined so that it has several native properties like bounded, monotonic and bijective. For example, the same sigmoid-like function as described in the following Eq. 4 may be adopted for each individual object prediction model 102. For different object prediction models 102 the parameters "a" and "k" of the sigmoid-like function may be determined in the same way using appropriate regression methods like least squares.

$$y = \frac{2(a-1)}{1+e^{kx}} + 1, \qquad\qquad (Eq.\ 4)$$

wherein

$$0 < a < 1,$$

$$k > 0.$$

In Eq 4, parameter "y" may describe the statistical values 408 or the true-positive rates determined based on the ground-truth data 302 and the plurality of confidence values. Parameter "x" may describe the confidence values of the predictions 404 determined using the respective object prediction model 102.

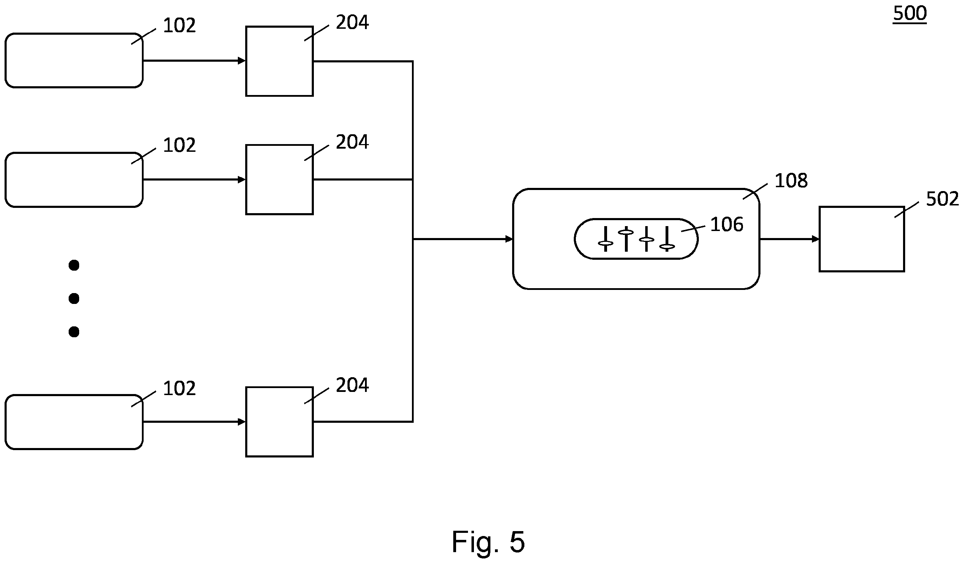

By fitting the conversion rule 204 to the plurality of sampling values 406 and the plurality of statistical values 408, a specific statistical value 408 may be determined for any arbitrary confidence value for the corresponding confidence module 202. Since this confidence calibration may be carried out automatically and may be implemented as an offline process, the same offline process may be carried out for all trained object prediction models 102. The conversion rule 204 may be used for determining tracker parameters 106 as shown in Fig. 5.

Fig. 5 shows a configuration system 500 for determining tracker parameters 106 of the tracking module 108 according to various embodiments. The tracker parameters 106 for the unified tracking module 108 may be determined based on the conversion rule 204. As shown in Fig. 5, the unified tracking module 108 (in other words: a fixed tracker or a unified tracker) may use the conversion rules 204 determined in a confidence calibration of a respective object prediction model 102 of a plurality of object prediction models 102 which may result in much faster development cycles. No further adaptation of the tracking module 108 may be needed after a new model deployment, tracker parameters 106 may once be tuned and may be used for subsequent updates of object prediction models 102. In other words, after determining and applying the conversion rule 204, the performance of different object prediction models 102 may be well aligned with respect to a reference model. Thus, a same tracker parameter 106 may be applied to a tracking module 108 without change in the tracking module 108. Further, a native detection rate may not be changed for the object prediction model 102, rather the confidence scores or confidence values may be leveraged at different TP-rate so that each object prediction model 102 may finally behave similarly (but not the same given the native performance of different object prediction models 102) at a specific confidence level.

Having a respective conversion rule for each of the different object prediction models 102 may provide that the respective outputs of the object prediction models 102, after being applied to the respective conversion rule for the specific object prediction model, yield comparable or aligned true-positive rate outputs. For example, applying a first conversion rule which has been calibrated for a first object prediction model to an output of the first object prediction model may provide similar results as applying a second conversion rule which has been calibrated for a second object prediction model to an output of the second object prediction model. Therefore, a problem of lacking interpretative confidence values or confidence values may be avoided. As a result, a trustful conversion rule 204 may be determined. Furthermore, because the correct true-positive rates may be bound to the confidence values, there may be less testing needed after a new model deployment.

The method described herein may be beneficial for many applications. An example would be that, when connecting a scene classification output of a scene classification module, the tracking module 108 may be adaptive to different scenarios. The scene classification output may describe a scene or a scenario determined by the scene classification module. For example, one scenario may be a tunnel scenario, wherein sensor data may be captured in a tunnel. Another scenario may be an open space scenario, wherein sensor data may be captured in an open space, for example on a highway, etc.

A combination of the methods described herein with the scene classification module may be described as follows. First, the different scenarios or scenes may be defined and also a plurality of data may be collected for each of the different scenarios. The methods described herein may be applied to each of the different scenarios individually, and confidence values may be obtained for each of the different scenarios. Second, if object prediction models 102 are utilized to sensor data of the different scenarios in a running stage, i.e. after the conversion rule for object prediction models 102 have been determined, a conversion rule 204 may be selected based on the scene detected of the scene classification module. For example, if the scene classification module detects a tunnel scenario, a conversion rule 204 which has been determined for a tunnel scenario (for example conversion rule based on Eq. 3 as described above) may be selected. For example, if the scene classification module detects an open space scenario, a conversion rule 204 which has been determined for an open space scenario (for example conversion rule based on Eq. 2 as described above) may be selected. Using the scene classification module and the methods described herein, performance for different scenarios may be optimized.

Furthermore, the method described herein may align, or in other words may stabilize, the confidence values or confidence scores for different object prediction models 102 by using statistical values 408, for example a TP-rate such that the calibrated scores may be sufficient regarding accuracy and reliability. Thus, the method described herein may be considered as a tracking module stabilizer (in other words: a tracker stabilizer) or a tracking module unifier (in other words: a tracker unifier). The calibrated scores may close a gap for different object prediction models 102 so that a unified tracking module 108 (in other words: a tracker) may be applied on top of whichever object prediction model 102. It may be possible to parameterize the object prediction models 102 with only a few parameters, for example, less parameters than in known methods. Therefore, the method described herein may have computational advantages, such as being extremely fast without adding noticeable overhead.

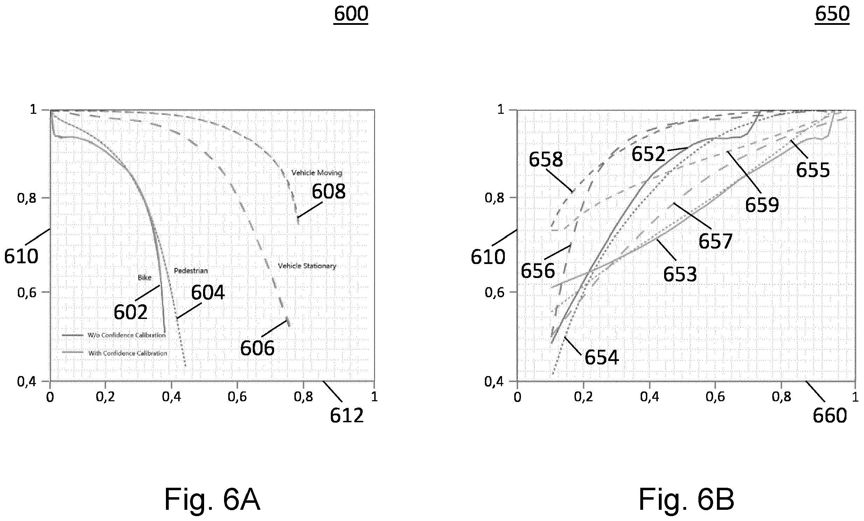

Fig. 6A shows precision recall curves 600 for an object prediction model 102 in different object classes. On the axis of ordinates, a precision value 610 and on the axis of abscissae a recall value 612 may be plotted. The object classes may include a bike object class, a pedestrian object class and vehicle object classes. Moreover, the object class for vehicles may be separated into two different object classes, one object class for moving vehicles, i.e. a moving vehicle object class, and one object class for stationary vehicles, i.e. a stationary vehicle object class. In Fig.6A, for each of the object classes two precision recall curves 600 are shown. Two precision recall curves 602 are shown in solid lines for the bike object class. Two precision recall curves 604 are shown in dotted lines for the pedestrian object class. Two precision recall curves 606 are shown in big gapped dashed lines for the stationary vehicle object class. Two precision recall curves 608 are shown in small gapped dashed lines for the stationary vehicle object class. One precision recall curve for each object class may be determined without the method described herein, for example, without a confidence calibration and the other precision recall curve for each object class may be determined using the methods described herein, for example, using the conversion rule 204 of the confidence calibration. The two precision recall curves 602, 604, 606, 608 of the respective object class may overlap each other in such a way that a difference between the two precision recall curves 602, 604, 606, 608 of the respective object class may hardly be determined. Thus, the methods described herein may not change the performance of the native object prediction model 102. The precision recall curves 602, 604, 606, 608 may overlap before and after the confidence calibration which means that the same performance before and after the confidence value may be expected since the same recall rate may be determined at a given fixed precision. The precision (or precision values 610) and recall (or recall values 612) described herein may be well-known standard definitions; for example, in object detection and classification, precision and recall may be performance metrics. The precision and recall may be calculated after Non-Maximum Suppression (NMS). In contrast the described TP-rates herein may be calculated before NMS. The precision and recall may be calculated for a single one to one match. That may mean, multiple detections on a single object may cause false positives (decreasing precision). The methods described herein, however, may calibrate raw confidence outputs of the object prediction models 102, which may mean that a multi detection to single object matching may be allowed.

Fig. 6B shows precision confidence curves 650 for the object prediction model 102 in the same different object classes as in Fig. 6A. On the axis of ordinates, the precision value 610 and on the axis of abscissae a confidence value 660 may be plotted. For each of the object classes two precision confidence curves 650 are shown. Two precision confidence curves 652, 653 are shown in solid lines for the bike object class. Two precision confidence curves 654, 655 are shown in dotted lines for the pedestrian object class. Two precision confidence curves 656, 657 are shown in big gapped dashed lines for the stationary vehicle object class. Two precision confidence curves 658, 659 are shown in small gapped dashed lines for the stationary vehicle object class. One precision confidence curve 652, 654, 656, 658 for each object class may be determined without the methods described herein, for example, without a confidence calibration and the other precision confidence curve 653, 655, 657, 659 for each object class may be determined using the methods described herein, for example, using the conversion rule 204 of the confidence calibration. The precision 610 may change significantly in that the precision 610 may increase more linearly after a confidence calibration may have been carried out. The precision 610 after performing the confidence calibration may be more interpretive and consistent with a subjective expectation.

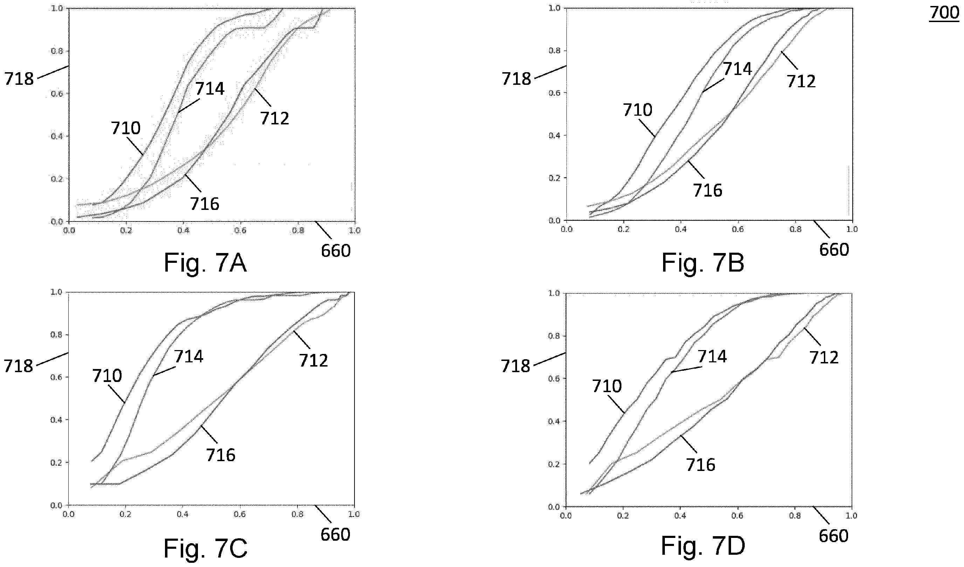

Figs. 7A to 7D show true-positive confidence curves 700 for two different object prediction models 102 in different object classes. In Fig. 7A true-positive rate confidence curves 710, 712, 714, 716 for the bike object class may be shown. In Fig. 7B true-positive rate confidence curves 710, 712, 714, 716 for the pedestrian object class may be shown. In Fig. 7C true-positive rate confidence curves 710, 712, 714, 716 for the stationary vehicle object class may be shown. In Fig. 7D true-positive rate confidence curves 710, 712, 714, 716 for the moving vehicle object class may be shown. On the respective axis of ordinates, the TP-rate 718 as described herein may be plotted, and on the respective axis of abscissae the confidence value 660 may be plotted. For each object class, a true-positive rate confidence curve 710 of a first object prediction model 102 without confidence calibration and a true-positive rate confidence curve 712 of the first object prediction model 102 with confidence calibration may be shown. Also, for each object class, a true-positive rate confidence curve 714 of a second object prediction model 102 without confidence calibration and a true-positive rate confidence curve 716 of the first object prediction model 102 with confidence calibration may be shown.

In Figs. 7A to 7D, it can be seen that the true-positive confidence curves 712, 716 for two different object prediction models 102 determined with confidence calibration may be well aligned after the confidence calibration. Without loss of generality, an example may be illustrated in more detail for the pedestrian object class in Fig. 7B. Two object prediction models 102 may be given, for example model 1 and model 2. The two object prediction models 102 may be trained separately and the performance of the two object prediction models 102 may differ quite significantly. A typical confidence threshold of 0.25 of the confidence value 660 may be assumed as a reference before confidence calibration. On one hand, a difference of the TP-rate 718 of model 1 and model 2 under the confidence threshold of 0.25 may be very large. On the other hand, with the same TP-rate level for a reference model (for example model 1), after confidence calibration, the difference of the TP-rate 718 of model 1 and model 2 may be much smaller under a confidence value 660 of 0.4. Therefore, without confidence calibration the confidence threshold may not be feasible for both model 1 and model 2 due to the large TP-rate 718 difference. In turn, after the confidence calibration may have been performed, the confidence threshold may be moved from 0.25 to 0.4 and a unified tracking module 108 may be applicable for both model 1 and model 2 because the gap of the TP-rate 718 between the two different object prediction models 102 may be closed after the confidence calibration process.

A similar effect may result for the bike object class, the stationary vehicle object class and the moving vehicle object class shown in Figs. 7A, 7C and 7D. The gaps of the respective TP-rate 718 of the two different object prediction models 102 may be closed after the confidence calibration has been performed. Due to the well aligned confidence value 660 after the confidence calibration, a unified tracking module 108 may be applicable for all object prediction models 102.

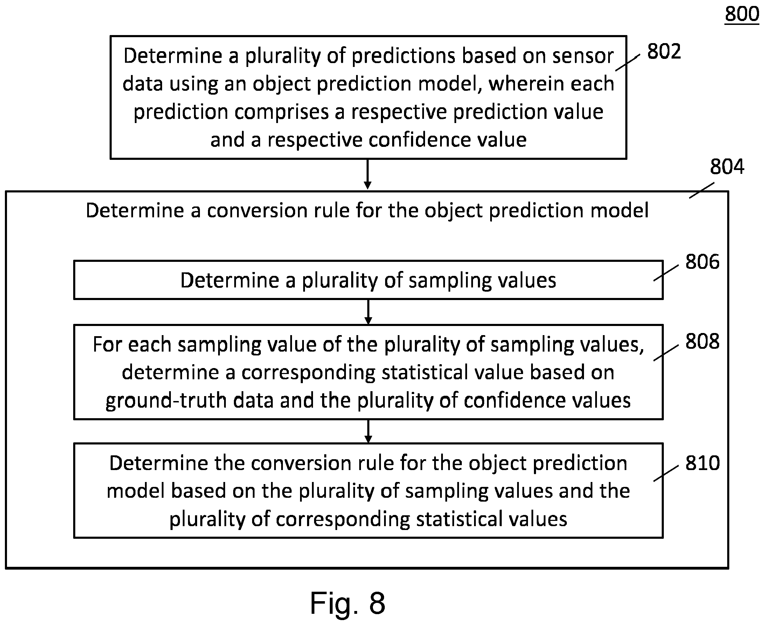

Fig. 8 shows a flow diagram 800 illustrating a method for determining a conversion rule according to various embodiments. At 802, a plurality of predictions based on sensor data using an object prediction model may be determined, wherein each prediction may include a respective prediction value and a respective confidence value. At 804, the conversion rule for the object prediction model may be determined by carrying out the following steps. At 806, a plurality of sampling values may be determined for assessing a performance of the object prediction model. At 808, for each sampling value of a plurality of sampling values, a corresponding statistical value may be determined based on ground-truth data and the plurality of confidence values, wherein the ground-truth data may be associated with the sensor data. At 810, the conversion rule may be determined for the object prediction model based on the plurality of sampling values and the plurality of corresponding statistical values.

According to various embodiments, the plurality of sampling values may correspond to the plurality of confidence values.

According to various embodiments, each statistical value of the plurality of statistical values may include a true-positive rate corresponding to the respective sampling value.

According to various embodiments, the method may further include the following step carried out by computer hardware components: filtering the ground-truth data based on a condition, wherein the condition may be at least one of an object class, a scene type, or bounding box properties; and for each sampling value of the plurality of sampling values, determining the corresponding statistical value based on the filtered ground-truth data and the plurality of confidence values.

According to various embodiments, the prediction values may include data describing the respective prediction associated to an object class of a plurality of object classes, and/or data describing the respective prediction including bounding box properties.

According to various embodiments, the method may further include the following steps carried out by computer hardware components: for each sampling value of the plurality of sampling values: determining a first number as a number of predictions with a respective confidence value greater or equal than the sampling value; determining a second number as a number of predictions with a respective confidence value greater or equal than the sample value, wherein the predictions with a respective confidence value greater or equal than the sample value may correspond to a corresponding object in the ground-truth data; and determining the statistical value by dividing the second number by the first number.

According to various embodiments, determining the conversion rule may include a fitting of the conversion rule to the plurality of sampling values and the plurality of corresponding statistical values.

According to various embodiments, the fitting of the conversion rule to the plurality of sampling values and the plurality of corresponding statistical values may include using a regression method.

According to various embodiments, the fitting of the conversion rule may approximate a curve based on a plurality of scores, wherein each score of the plurality of scores may represent a statistical value of the plurality of statistical values and the corresponding sampling value of the plurality of sampling values, wherein each score may have a minimum distance to the curve.

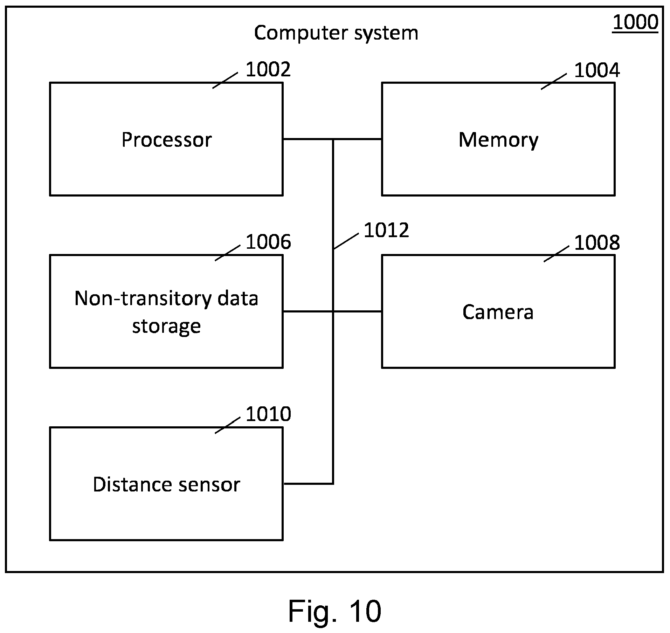

Each of the steps 802, 804, 806, 808, 810, and the further steps described above may be performed by computer hardware components, for example as described with reference to Fig. 10.

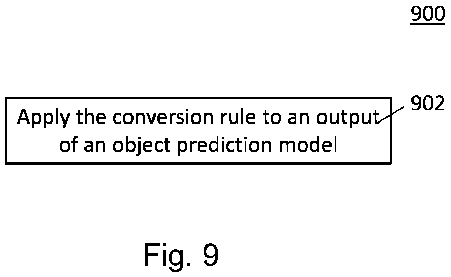

Fig. 9 shows a flow diagram 900 illustrating a method for applying a conversion rule according to various embodiments. At 902, the conversion rule may be applied to an output of an object prediction model.

According to various embodiments, the method may further include the following step carried out by computer hardware components: determining a tracker parameter for a unified tracking module based on the conversion rule such that the unified tracking module is applicable to the object prediction model.

According to various embodiments, the output of the object prediction model once applied to the conversion rule may be used as input to the unified tracking module.

The step 902 and the further steps described above may be performed by computer hardware components, for example as described with reference to Fig. 10.

Fig. 10 shows a computer system 1000 with a plurality of computer hardware components configured to carry out steps of a computer implemented method for determining and/or applying a conversion rule according to various embodiments. The computer system 1000 may include a processor 1002, a memory 1004, and a non-transitory data storage 1006. A camera 1008 and/or a distance sensor 1010 (for example a radar sensor or a LIDAR sensor) may be provided as part of the computer system 1000 (like illustrated in Fig. 10), or may be provided external to the computer system 1000.

The processor 1002 may carry out instructions provided in the memory 1004. The non-transitory data storage 1006 may store a computer program, including the instructions that may be transferred to the memory 1004 and then executed by the processor 1002. The camera 1008 and/or the distance sensor 1010 may be used to determine sensor data, for example sensor data that is provided to determine a plurality of predictions using an object prediction model as described herein.

The processor 1002, the memory 1004, and the non-transitory data storage 1006 may be coupled with each other, e.g. via an electrical connection 1012, such as e.g. a cable or a computer bus or via any other suitable electrical connection to exchange electrical signals. The camera 1008 and/or the distance sensor 1010 may be coupled to the computer system 1000, for example via an external interface, or may be provided as parts of the computer system (in other words: internal to the computer system, for example coupled via the electrical connection 1012).

The methods and systems described herein may use confidence calibration for object detection. The confidence calibration may be applied for a plurality of object prediction models, and/or for a plurality of object classes, and/or a plurality of bounding box parameters, and/or a plurality of scene types. Calibrated confidence scores or confidence values may be determined by the methods and systems described herein to align confidence scores for different object prediction models such that a unified tracking module with a fixed parameter set may be applied on top of whichever object prediction model may finally be chosen. Furthermore, a plurality of subsets may be created of the sensor data or of the ground-truth data, wherein each subset of the plurality of subsets may correspond to a specific scenario or a specific condition, for example, to an object class, to a bounding box parameter and/or to a scene type. A calibration curve may be determined for each subset of the plurality of subsets individually.

The terms "coupling" or "connection" are intended to include a direct "coupling" (for example via a physical link) or direct "connection" as well as an indirect "coupling" or indirect "connection" (for example via a logical link), respectively.

It will be understood that what has been described for one of the methods above may analogously hold true for the computer system 1000.

Reference numeral list

| | |
|---|---|
| 100 | perception system |
| 102 | object prediction model |
| 104 | predictor module |
| 106 | tracker parameter |
| 108 | tracking module |
| 110 | recorded data |
| 112 | object detection |
| | |
| 200 | further perception system |
| 202 | confidence module |
| 204 | conversion rule |
| | |
| 300 | calibration system for confidence calibration |
| 302 | ground-truth data |
| 304 | statistical value estimator |
| 306 | conversion rule estimator |
| | |
| 400 | conversion system for determining a conversion rule according to various embodiments |
| 402 | sensor data |
| 404 | prediction |
| 406 | sampling value |
| 408 | statistical value |
| 410 | object |
| 412 | score |
| | |
| 500 | configuration system for determining tracker parameters of a tracking module according to various embodiments |
| 502 | output |
| | |
| 600 | precision recall curve |
| 602 | precision recall curves for a bike object class |
| 604 | precision recall curves for a pedestrian object class |
| 606 | precision recall curves for a stationary vehicle object class |
| 608 | precision recall curves for a moving vehicle object class |
| 610 | precision |
| 612 | recall |
| | |
| 650 | precision confidence curve |
| 652 | precision confidence curve for the bike object class without confidence calibration |
| 653 | precision confidence curve for the bike object class with confidence calibration |
| 654 | precision confidence curve for the pedestrian object class without confidence calibration |
| 655 | precision confidence curve for the pedestrian object class with confidence calibration |
| 656 | precision confidence curve for the stationary vehicle object class without confidence calibration |
| 657 | precision confidence curve for the stationary vehicle object class with confidence calibration |
| 658 | precision confidence curve for the moving vehicle object class without confidence calibration |
| 659 | precision confidence curve for the moving vehicle object class with confidence calibration |
| 660 | confidence value |
| | |
| 700 | true-positive rate confidence curve |
| 710 | true-positive rate confidence curve of a first prediction model without confidence calibration |
| 712 | true-positive rate confidence curve of the first prediction model after with confidence calibration |
| 714 | true-positive rate confidence curve of a second prediction model without confidence calibration |
| 716 | true-positive rate confidence curve of the second prediction model with confidence calibration |
| 718 | TP-rate |

800     flow diagram illustrating a method for determining a conversion rule according to various embodiments
802     step of determining a plurality of predictions based on sensor data
804     step of determining the conversion rule for an object prediction model
806     step of determining a plurality of sampling values
808     step of determining a statistical value for each sampling value of the plurality of sampling values
806     step of determining the conversion rule for the object prediction model based on the plurality of sampling values and the plurality of corresponding statistical values

900     flow diagram illustrating a method for applying a conversion rule according to various embodiments
902     step of applying the conversion rule to an output of the object prediction model

1000    computer system according to various embodiments
1002    processor
1004    memory
1006    non-transitory data storage
1008    camera
1010    distance sensor
1012    connection

**Claims**

1. Computer implemented method for determining a conversion rule (204) for an object prediction model (102), the method comprising the following steps carried out by computer hardware components:

   - determining (802) a plurality of predictions (404) based on sensor data (402) using the object prediction model (102), wherein each prediction (404) comprises a respective prediction value and a respective confidence value of the respective prediction value;
   - determining (804) the conversion rule (204) for the object prediction model (102) by carrying out the following steps:

     - determining (806) a plurality of sampling values (406) for assessing a performance of the object prediction model (102);
     - for each sampling value (406) of the plurality of sampling values (406), determining (808) a corresponding statistical value (408) based on ground-truth data (302) and the plurality of confidence values, wherein the ground-truth data (302) is associated with the sensor data (402); and
     - determining (810) the conversion rule (204) for the object prediction model (102) based on the plurality of sampling values (406) and the plurality of corresponding statistical values (408).

2. The method of claim 1,
   wherein the plurality of sampling values (406) corresponds to the plurality of confidence values.

3. The method of at least one of claims 1 or 2,
   wherein each statistical value (408) of the plurality of statistical values (408) comprises a true-positive rate corresponding to the respective sampling value (406).

4. The method of at least one of claims 1 to 3, further comprising the following steps carried out by computer hardware components:

   - filtering the ground-truth data (302) based on a condition,
   wherein the condition is at least one of an object class, a scene type, or bounding box properties; and
   - for each sampling value (406) of the plurality of sampling values (406), determining the corresponding statistical value (408) based on the filtered ground-truth data (302) and the plurality of confidence values.

5. The method of at least one of claims 1 to 4,
   wherein the prediction values comprise data describing the respective prediction (404) associated to an object class of a plurality of object classes, and/or data describing the respective prediction (404) associated to bounding box properties.

6. The method of at least one of claims 1 to 5, further comprising the following steps carried out by computer hardware components:

- for each sampling value (406) of the plurality of sampling values (406):

- determining a first number as a number of predictions (404) with a respective confidence value greater or equal than the sampling value (406);
- determining a second number as a number of predictions (404) with a respective confidence value greater or equal than the sample value (406), wherein the predictions (404) with a respective confidence value greater or equal than the sample value (406) correspond to a corresponding object (410) in the ground-truth data (302); and
- determining the statistical value (408) by dividing the second number by the first number.

7. The method of at least one of claims 1 to 6,
wherein determining the conversion rule (204) comprises a fitting of the conversion rule (204) to the plurality of sampling values (406) and the plurality of corresponding statistical values (408).

8. The method of claim 7,
wherein the fitting (806) of the conversion rule (204) to the plurality of sampling values (406) and the plurality of corresponding statistical values (408) comprises using a regression method.

9. The method of at least one of claims 7 to 8,
wherein the fitting (806) of the conversion rule (204) approximates a curve based on a plurality of scores (412), wherein each score (412) of the plurality of scores (412) represents a statistical value (408) of the plurality of statistical values (408) and the corresponding sampling value (406) of the plurality of sampling values (406), wherein each score (412) comprises a minimum distance to the curve.

10. Computer-implemented method for applying a conversion rule (204) determined according to at least one of claims 1 to 9, the method comprising the following step carried out by computer hardware components:

- applying (902) the conversion rule (204) to an output of an object prediction model (102).

11. The method of claim 10, further comprising the following step carried out by computer hardware components:

- determining a tracker parameter (106) for a unified tracking module (108) based on the conversion rule (204) such that the unified tracking module (108) is applicable to the object prediction model (102).

12. The method of claim 11,
wherein the output of the object prediction model (102) once applied to the conversion rule (204) is used as input to the unified tracking module (108).

13. Computer system (1000), the computer system (1000) comprising a plurality of computer hardware components configured to carry out steps of the computer implemented method of at least one of claims 1 to 12.

14. Vehicle, comprising the computer system (1000) of claim 13 and at least one sensor.

15. Non-transitory computer readable medium comprising instructions which, when executed by a computer, cause the computer to carry out the computer implemented method of at least one of claims 1 to 12.

Fig. 1

Fig. 2

300

302

104

102

304

306

204

102

102

102

Fig. 3

Fig. 4

Fig. 5

Fig. 6B

Fig. 6A

700

Fig. 7A

Fig. 7B

Fig. 7C

Fig. 7D

800

Determine a plurality of predictions based on sensor data using an object prediction model, wherein each prediction comprises a respective prediction value and a respective confidence value — 802

Determine a conversion rule for the object prediction model — 804

Determine a plurality of sampling values — 806

For each sampling value of the plurality of sampling values, determine a corresponding statistical value based on ground-truth data and the plurality of confidence values — 808

Determine the conversion rule for the object prediction model based on the plurality of sampling values and the plurality of corresponding statistical values — 810

Fig. 8

EP 4 386 693 A1

900

Apply the conversion rule to an output
of an object prediction model — 902

Fig. 9

Computer system — 1000

Processor — 1002

Memory — 1004

Non-transitory data storage — 1006

1012

Camera — 1008

Distance sensor — 1010

Fig. 10

Europäisches
Patentamt

European
Patent Office

Office européen
des brevets

# EUROPEAN SEARCH REPORT

**Application Number**

EP 22 21 3508

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | A. ESS ET AL: "Object Detection and Tracking for Autonomous Navigation in Dynamic Environments", THE INTERNATIONAL JOURNAL OF ROBOTICS RESEARCH, vol. 29, no. 14, 1 December 2010 (2010-12-01), pages 1707-1725, XP055170047, ISSN: 0278-3649, DOI: 10.1177/0278364910365417 * abstract; figure 6 * * sec. 5.1 * ----- | 1-15 | INV. G06V10/776 G06V20/58 |

**TECHNICAL FIELDS SEARCHED (IPC)**

G06V

The present search report has been drawn up for all claims

| Place of search | Date of completion of the search | Examiner |
|---|---|---|
| The Hague | 11 May 2023 | Mitzel, Dennis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................
& : member of the same patent family, corresponding document

EPO FORM 1503 03.82 (P04C01)